# EUROPEAN PATENT APPLICATION

(11) **EP 4 198 671 A1**
(43) Date of publication of application: **21.06.2023**
(21) Application number: 22214576.5
(22) Date of filing: 19.12.2022
(51) Int. Cl.: G05D 1/02

(54) **METHODS OF AREA MAPPING WITH A MOBILE ROBOT THAT CROSSES AREAS WITHOUT COMMUNICATIONS NETWORK AVAILABILITY, AND SHARING THE SAME WITH OTHER MOBILE ROBOTS**

(30) Priority: 20.12.2021 US 202117555913
(71) Applicant: Blue Ocean Robotics Aps, 5260 Odense (DK)
(72) Inventor: Vistisen, Rasmus, Odense (DK); Østergaard, John Erland, Odense (DK); Voldsgaard, Peter Juhl, Fredericia (DK); Thomsen, Laust, Odense (DK); Vitzrabin, Efraim, Odense (DK)
(74) Representative: Poskett, Oliver James

(57) **Abstract**

Implementations of the disclosed subject matter provide a method that includes receiving, at a communications interface, one or more control signals to control a drive system of the mobile robot to move within an area. A surface within the area and/or an object within the area may be detected using at least one sensor of the mobile robot. Using a processor communicatively coupled to the at least one sensor, the area may be mapped in two dimensions (2D) or three dimensions (3D) based on the detecting of at least one of the surface and the object as the mobile robot moves within the area based on the one or more received control signals. The method may include mapping, using the processor and the communications interface, wireless network communication signal strength as the mobile robot moves within the area based on the one or more received control signals.

## Description

### BACKGROUND

Mobile devices, such as mobile robots, can be controlled from a remote location by an operator via a wireless communications link between the mobile robot and a device of the operator. When the mobile robot enters an area where there is a loss of the wireless communications link, the operator is unable to control the mobile robot using the device. The loss of the communications link is typically due to signal interference or distance.

### BRIEF SUMMARY

According to an implementation of the disclosed subject matter, a method may include receiving, at a communications interface of a mobile robot, one or more control signals to control a drive system of the mobile robot to move within an area. A surface within the area and/or an object within the area may be detected using at least one sensor of the mobile robot. Using a processor communicatively coupled to the at least one sensor, the area may be mapped in two dimensions (2D) or three dimensions (3D) based on the detecting of at least one of the surface and the object as the mobile robot moves within the area based on the one or more received control signals. The method may include mapping, using the processor and the communications interface, wireless network communication signal strength, including portions of the area where no wireless network communication signal is available, as the mobile robot moves within the area based on the one or more received control signals.

Additional features, advantages, and implementations of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIGS. 1-7 shows an example method of mapping a wireless network communication signal strength as a mobile robot moves within the area according to an implementation of the disclosed subject matter.
FIGS. 8-9 show an example mobile robot according to an implementation of the disclosed subject matter.
FIG. 10 shows an example of mapping the movement of the mobile robot and the wireless network communication signal strength using the method of FIGS. 1-7 according to an implementation of the disclosed subject matter.
FIG. 11 shows the connectivity of the mobile robot with the wireless network as the mobile robot moves according to an implementation of the disclosed subject matter.
FIG. 12 shows an example sharing operation between mobile robots to share the generated map that includes the wireless network communication signal strength according to an implementation of the disclosed subject matter.
FIGS. 13-21 show examples of the operations of the mobile robot based on the operations shown in FIGS. 1-7.
FIG. 22 shows an example configuration of the mobile robot of FIGS. 8-9 according to an implementation of the disclosed subject matter.
FIG. 23 shows a network configuration which may include a plurality of mobile robots that may share generated maps with one another according to implementations of the disclosed subject matter.

### DETAILED DESCRIPTION

Implementations of the disclosed subject matter provide a mobile robot that may generate a two-dimensional (2D) and/or three-dimensional (3D) map of an area, which may include wireless network communication signal strength of a communications network for one or more portions of the mapped area. The mobile robot may be configured to receive one or more control signals from a remote operator via the communications network to control a drive system of the mobile robot to move within an area. The mobile robot may be further configured to operate autonomously when the mobile robot enters a portion of the area without a connection to the communications network (i.e., an absence of wireless network communication signal strength). The mobile robot may provide a notification to the remote operator when the mobile robot is being directed into a portion of the area without the connection to the communications network. The mobile robot may transmit the generated maps of the area that include the wireless network communication signal strength to one or more other mobile robots, which may be of the same type or a different type. Areas and/or buildings that one or more mobile robots may operate in may have different wireless network communication signal strengths in different areas, and implementations of the disclosed subject matter may map the areas and the network communication signals strengths, which may be shared amongst mobile robots.

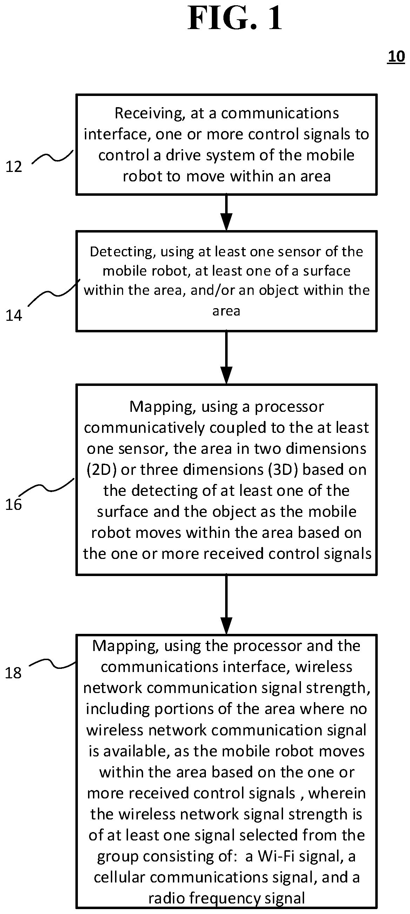

FIGS. 1-7 shows an example method 10 of mapping a wireless network communication signal strength as a mobile robot moves within the area according to an implementation of the disclosed subject matter.

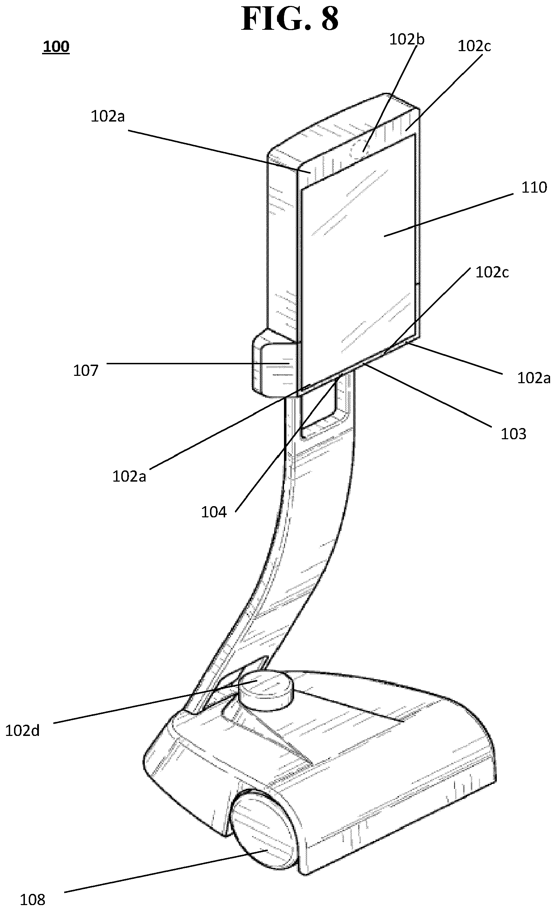

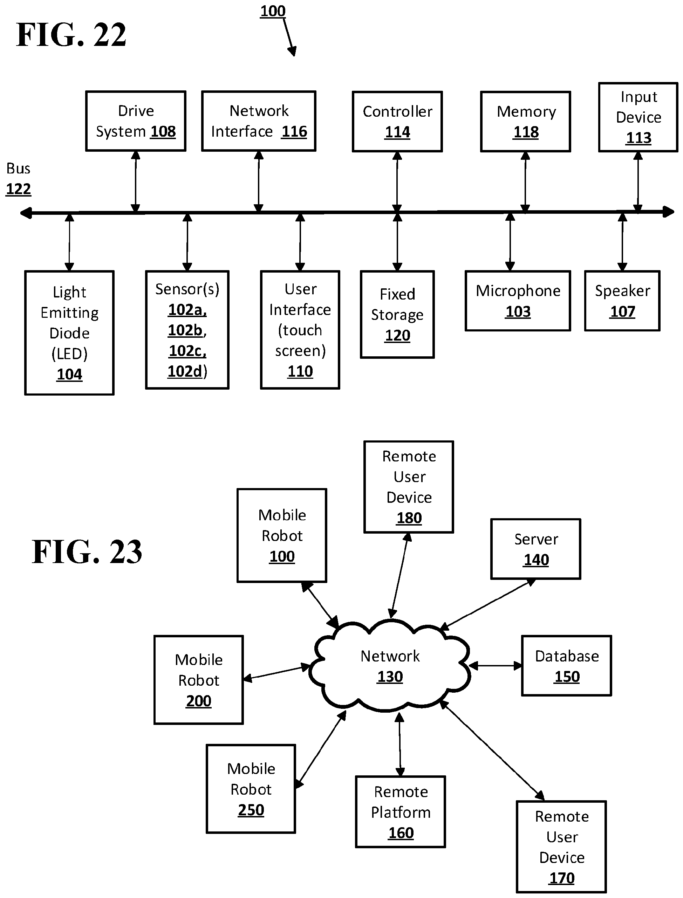

At operation 12 of FIG. 1, a communications interface (e.g., network interface 116 shown in FIG. 22) of a mobile robot (e.g., mobile robot 100 shown in FIGS. 8, 9, 22, and 23) may receive one or more control signals to control a drive system (e.g., drive system 108 shown in FIGS. 8, 9, and 22) of the mobile robot to move within an area. The communications interface may receive the control signals via communications network 130 from server 140, remote platform 160, remote user device 170, and/or remote user device 180. An operator may control the operations of the mobile robot by providing control signals from the server 140, remote platform 160, remote user device 170, and/or remote user device 180 to the mobile robot 100 via the communications network 130.

At operation 14, a surface and/or an object within the area may be detected using at least one sensor (e.g., sensor 102a, 102b, 102c, 102d shown in FIGS. 8, 9, and 22) of the mobile robot. As the mobile robot moves within the area, the sensors may detect the surfaces and/or objects within the area. The detected surfaces and/or objects may be added to a map that is electronically generated by the process of the mobile robot, as discussed in detail below.

At operation 16, a processor (e.g., controller 114 shown in FIG. 22) communicatively coupled to the at least one sensor may map the area in two dimensions (2D) or three dimensions (3D) based on the surfaces and/or the objects detected by the one or more sensors as the mobile robot moves within the area. The generated 2D or 3D map may be stored, for example, in memory 118 and/or fixed storage 120 shown in FIG. 8, and/or may be transmitted and stored at server 140, database 150, and/or remote platform 160 shown in FIG. 23.

At operation 18, the processor (e.g., controller 114 shown in FIG. 22) may map the wireless network communication signal strength, including portions of the area where no wireless network communications signal is available, as the mobile robot moves within the area. The wireless network signal strength may be mapped for at least one of a Wi-Fi signal, a cellular communications signal, a radio frequency signal (e.g,. a BlueToothTM signal or other ultra high frequency (UHF) signal), or the like. The processor and/or the communications interface may determine the signal strength of the wireless network communication signal as the mobile robot moves within the area. The determined signal strength at a particular portion of the area may be mapped by the processor. That is, as the mobile robot moves within the area, the communications interface and/or one or more sensors may determine the signal strength of the communications network at the location in which the mobile robot is operating, and may add the signal strength determination to a map that corresponds to the location of the mobile robot. The location of the mobile robot may be determined, for example, by one or more sensors.

In some implementations, the communications interface of the mobile robot (e.g., mobile robot 100) may transmit at least a portion of the mapped area and/or the mapped wireless communication signal strength to at least one other mobile robot (e.g., mobile robot 200 and/or mobile robot 250 shown in FIG. 23). For example, the mobile robot 100 may transmit the mapped area and the mapped wireless communication signal strength using network interface 116 to mobile robot 200 and/or mobile robot 250 via communications network 130. In some implementations, the mobile robot 100 may transmit at least a portion of the generated map of the area that may include the wireless communication signal strength to the server 140, database 150, and/or remote platform 160, and may transmit a notification to the mobile robot 200, 250 via the communications network that the map may be retrieved from the server 140, database 150, and/or remote platform 160 by the mobile robot 200, 250 via the communications network 130.

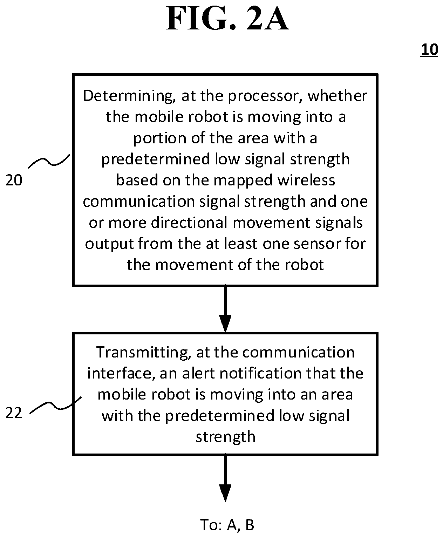

FIG. 2A may show additional operations of method 10 according to an implementation of the disclosed subject matter. At operation 20, the processor (e.g., controller 114 shown in FIG. 22) of the mobile robot may determine whether the mobile robot is moving into a portion of the area that has a predetermined low signal strength based on the mapped wireless communication signal strength and one or more directional movement signals output from the at least one sensor (e.g., sensor 102, 102b, 102c, 102d) for the movement of the robot. In some implementations, the mobile robot may determine whether the mobile robot is moving into a portion of the area with a predetermined low signal strength based on the current signal strength as determined by the communications interface (e.g., network interface 116 shown in FIG. 22).

At operation 22, the communications interface of the mobile robot may transmit an alert notification that the mobile robot is moving into an area with the predetermined low signal strength. For example, the mobile robot may transmit the notification to the server 140, remote platform 160, the remote user device 170, and/or the remote user device 180 via the communications network 130 as shown in FIG. 23. The notification may prompt the operator providing control signals to the mobile robot via the communications network 130 from the server 140, remote platform 160, the remote user device 170, and/or the remote user device 180 to provide control signals to move the robot to an area with improved signal strength. In some implementations, the notification may provide an estimate of the amount of time before the mobile robot enters a portion of the area without a communications network signal. The mobile robot may operate autonomously when a link to the communications network is unavailable (e.g., a wireless communications signal is unavailable). The processor of the mobile robot may use a map stored in memory (e.g., memory 118 and/or fixed storage 120 shown in FIG. 22) to control the drive system 108 to move the mobile robot within the area.

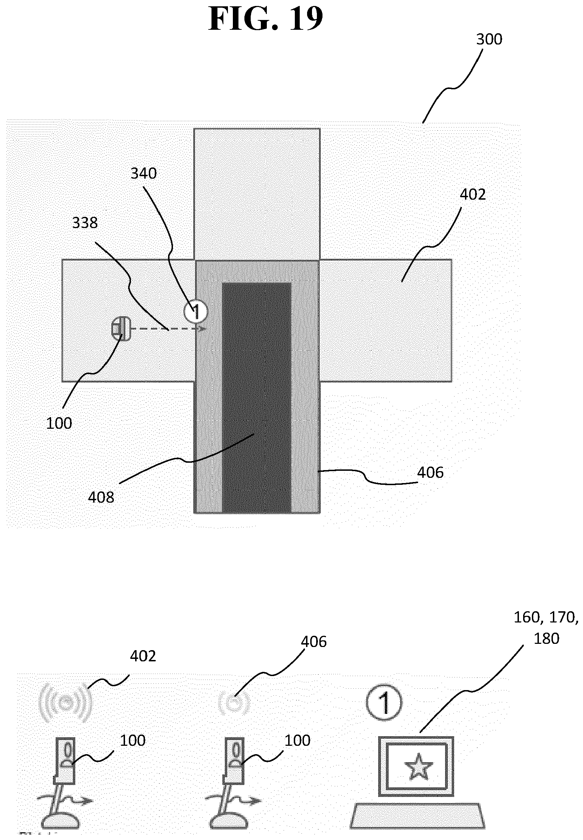

For example, FIG. 19 shows the operations of the mobile robot 100 based on the operations shown in FIG. 2A. The mobile robot 100 may receive commands via the wireless communication signal having a predetermined high signal strength 402 (e.g., a wireless communication signal strength 402 that may be greater than a predetermined amount). When the mobile robot travels along path 338 of the map 300 and reaches the portion of the area 340 having a predetermined low signal strength 406 (e.g., a wireless communication signal strength 406 that may be less than a predetermined amount), the mobile robot 100 may transmit a notification that the mobile robot is entering an area with the predetermined low signal strength 406 to a computing system of an operator or pilot of the mobile robot (e.g., remote platform 160, remote user device 170, and/or remote user device 180 shown in FIG. 23).

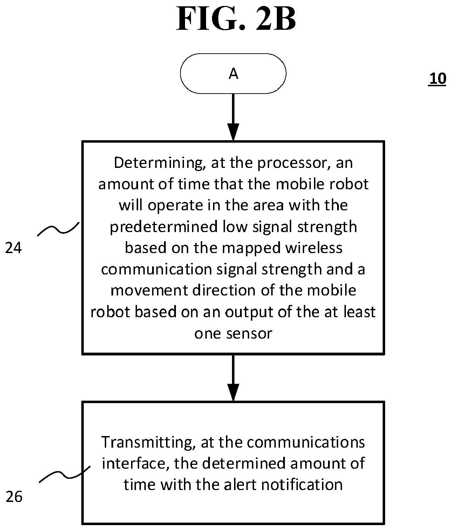

In some implementations, optional additional operations for method 10 are shown in FIG. 2B which may be performed after operation 22 of FIG. 2A. As shown in operation 24 of FIG. 2B, the processor of the mobile robot may determine an amount of time that the mobile robot may operate in the area with the predetermined low signal strength based on the mapped wireless communication signal strengths, and a movement direction of the mobile robot based on an output of the at least one sensor. In some implementations, the amount of time may be determined by the current speed that the mobile robot is moving in the area. The current speed may be determined by the one or more sensors of the mobile robot. At operation 26, the communications interface of the mobile robot may transmit the determined amount of time with the alert notification. For example, the mobile robot may transmit the determined time amount via the communications network to the server 140, remote platform 160, remote user device 170, and/or remote user device 180 to inform the operator of the determined amount of time before the operator may no longer be able to control the mobile robot, and the mobile robot may operate autonomously (e.g., until a communications link via a wireless communications signal is re-established based on the location of the mobile robot).

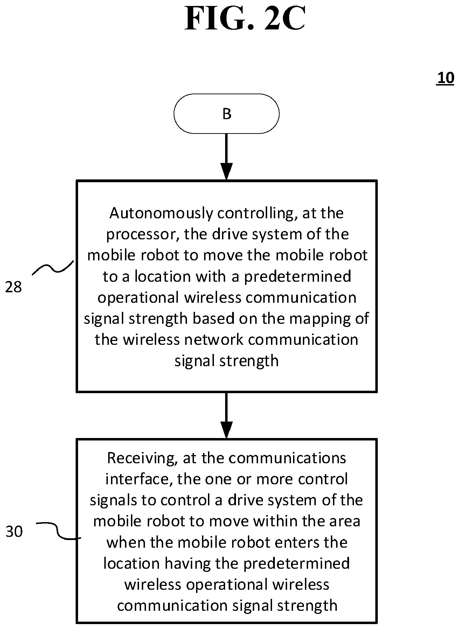

In some implementations, the operations shown in FIG. 2C may be performed after operation 22 shown in FIG. 2A. At operation 28 shown in FIG. 2C, the processor of the mobile robot may autonomously control the drive system of the mobile robot to move the mobile robot to a location with a predetermined operational wireless communication signal strength based on the mapping of the wireless network communication signal strength. At operation 30, the communications interface of the mobile robot may receive one or more control signals to control a drive system of the mobile robot to move within the area when the mobile robot enters the location having the predetermined wireless operational wireless communication signal strength. In some implementations, the mobile robot may transmit a notification to the server 140, remote platform 160, remote user device 170, and/or remote user device 180 when wireless communication signal strength is available to the mobile robot, and the mobile robot may receive control signals via the communications network 130 from the operator.

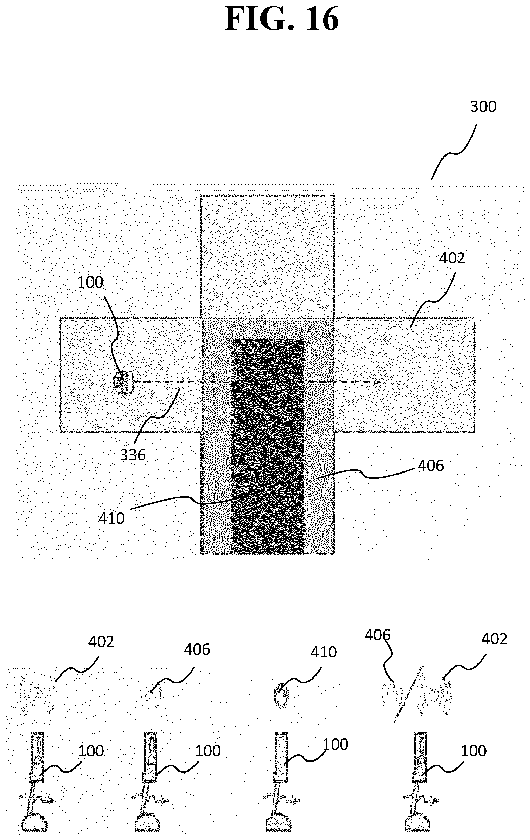

For example, FIG. 16 shows the operations of the mobile robot 100 based on the operations shown in FIGS. 2A-2C. The mobile robot 100 may move along path 336. When the mobile robot 100 reaches the area having the predetermined low signal strength 406, the communications interface of the mobile robot 100 may transmit an alert notification that the mobile robot 100 is moving into the area with the predetermined low signal strength 406. The notification may include a warning that the wireless communication signal connection may be lost for a determined period of time. The notification may prompt the operator providing control signals (e.g., via remote platform 160, remote user device 170, and/or remote user device 180) to the mobile to provide control signals to move the robot to an area with improved signal strength (e.g., an area having the predetermined high signal strength 402). The mobile robot 100 may operate autonomously when the wireless communications signal is unavailable at 410. That is, the processor of the mobile robot 100 may use the map 300 stored in memory to control the drive system to move the mobile robot 100 within the area to the portion having the predetermined low signal strength 406 or the predetermined high signal strength 402. When the mobile robot 100 enters an area with a predetermined low wireless communication signal strength 406 or a predetermined high wireless communication signal strength 402, the mobile robot 100 may receive commands via the wireless communications signal from an operator at remote platform 160, remote user device 170, and/or remote user device 180.

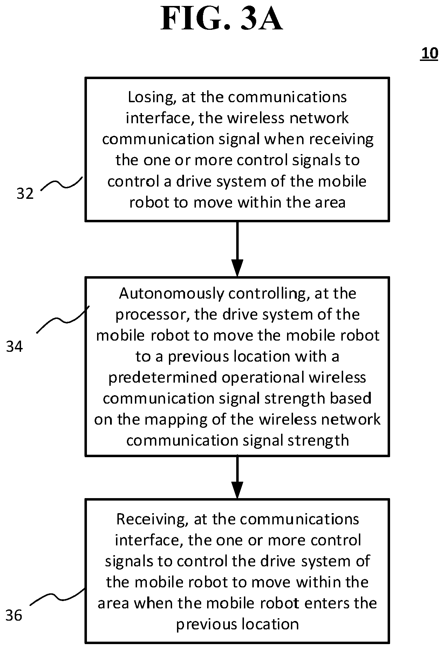

In some implementations, optional operations for method 10 are shown in FIGS. 3A-3B. At operation 32, the communications interface (e.g., network interface 116 shown in FIG. 22) of the mobile robot 100 may lose the wireless network communication signal when receiving the one or more control signals to control a drive system of the mobile robot to move within the area. For example, one or more objects and/or other signals may interrupt the path of the wireless network communications signal. In another example, a wireless network access point which may provide the wireless network communication signal may no longer be operating normally, which may cause the loss of the wireless network communication signal.

At operation 34 the processor (e.g., controller 114 shown in FIG. 22) of the mobile robot may control the drive system (e.g., drive system 108 shown in FIG. 22) to move the mobile robot to a previous location. The previous location may have a predetermined operational wireless communication signal strength based on the mapping of the wireless network communication signal strength.

At operation 36, the communications interface of the mobile robot may receive the one or more control signals to control the drive system of the mobile robot to move within the area when the mobile robot enters the previous location.

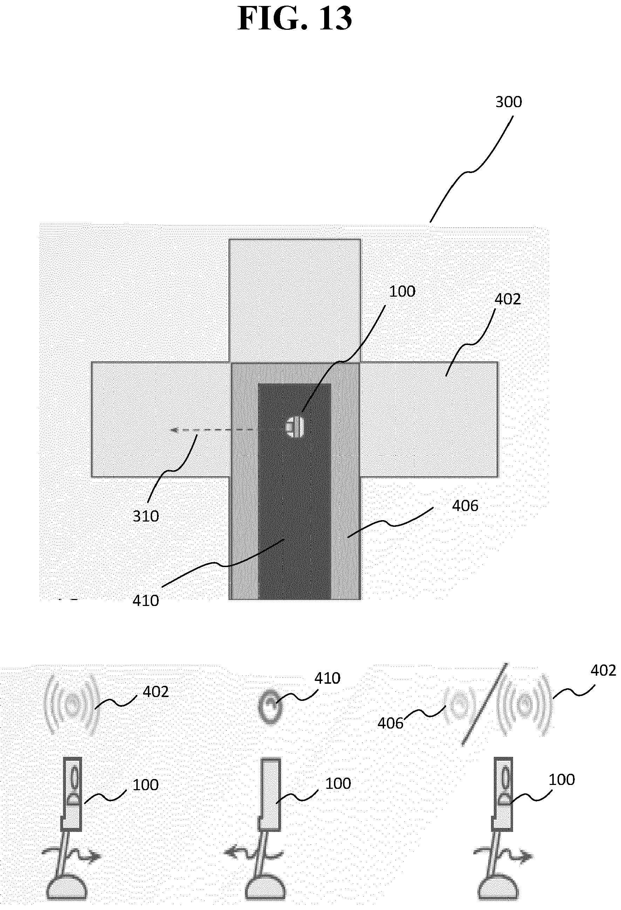

For example, FIG. 13 shows the operations of the mobile robot 100 based on the operations shown in FIG. 3A. A map 300 may include the wireless network communication signal strength. That is, the mobile robot 100 may move from a portion of the area having wireless communication signal strength 402 that may be greater than a predetermined amount (i.e., signal strength 402 may indicate a connection with high wireless signal strength), to a portion of the area having a wireless communication signal strength 406 that is less than the predetermined amount (i.e., signal strength 406 may indicate a connection with a reduced wireless signal strength), and to a portion of the area when there is no wireless communications signal available, as indicated by no wireless communications signal 410. When the portion of the area having no wireless communications signal 410 is reached, the mobile robot 100 may autonomously move along path 310 to move to a previous location having wireless communication signal strength 406 or 410, and the mobile robot 100 may receive control signals to control the movement of the mobile robot 100.

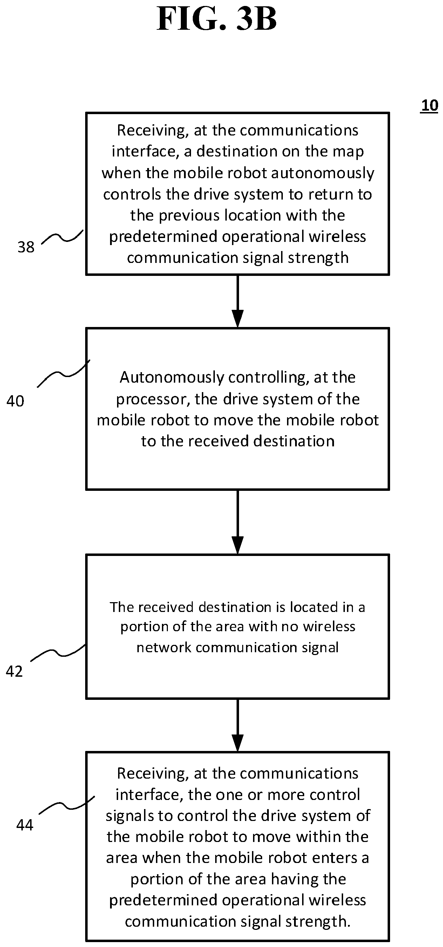

Optional operations of method 10 according to an implementation of the disclosed subject matter may be shown in FIG. 3B. At operation 38, the communications interface (e.g., network interface 116 shown in FIG. 22) of the mobile robot 100 may receive a destination on the map when the mobile robot autonomously controls the drive system to return to the previous location with the predetermined operational wireless communication signal strength. The destination may be received from an operator and/or pilot of the mobile robot. In some implementations, the destination may be received from server 140, remote platform 160, remote user device 170, and/or remote user device 180 shown in FIG. 23 via the communications network 130. At operation 40, the processor (e.g., controller 114 shown in FIG. 22) of the mobile robot may autonomously control the drive system (e.g., drive system 108 shown in FIG. 22) of the mobile robot to move the mobile robot to the received destination.

In some implementations, the received destination may be located in or along a route of the mobile robot that may have no wireless network communication signal, as shown in operation 42 of FIG. 3B.

In some implementations, the communications interface of the mobile robot may receive the one or more control signals to control the drive system of the mobile robot to move within the area when the mobile robot enters a portion of the area having the predetermined operational wireless communication signal strength at operation 44.

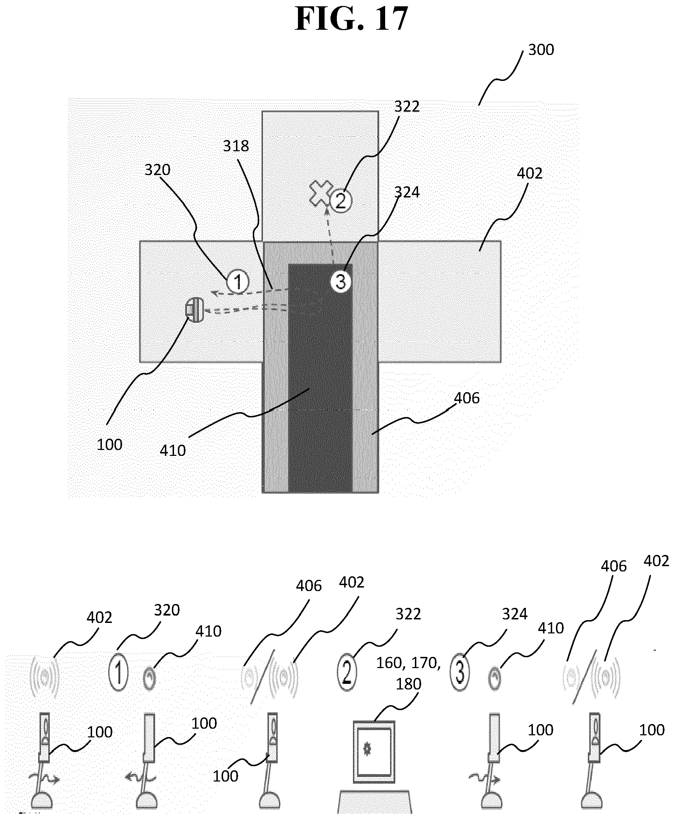

For example, FIG. 17 shows the operations of the mobile robot 100 based on FIG. 3B. The mobile robot 100 moves along path 318, and the communications signal may be interrupted, or there may be no wireless communication signal available along the route 318. The mobile robot 100 may autonomously control the drive system to return to the previous location 320 with the predetermined operational wireless communication signal strength 402. When the wireless communication signal is available, the mobile robot 100 may receive a destination 322 on map 300 from server 140, remote platform 160, remote user device 170, and/or remote user device 180 shown in FIG. 23 via the communications network 130. The processor (e.g., controller 114 shown in FIG. 22) of the mobile robot 100 may autonomously control the drive system (e.g., drive system 108 shown in FIG. 22) of the mobile robot 100 to move the mobile robot 100 to the received destination 322.

As shown in FIG. 17, the received destination may be located in or a route of the mobile robot 100 may go through a portion of the area (e.g., portion 324) with no wireless network communication signal. The mobile robot 100 may autonomously operate to move through the area with no wireless communications signal. The communications interface of the mobile robot may receive the one or more control signals to control the drive system of the mobile robot 100 to move within the area when the mobile robot 100 enters a portion of the area having the predetermined operational wireless communication signal strength (e.g., a wireless communication signal having low signal strength 406 or high signal strength 402).

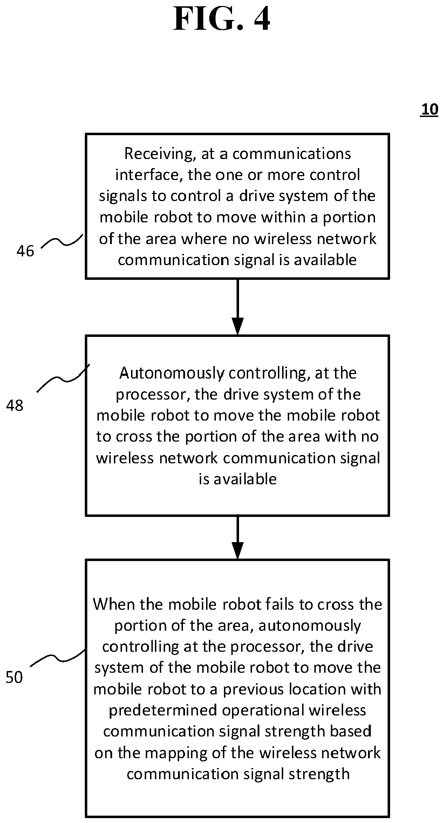

In some implementations, optional operations for method 10 are shown in FIG. 4. The communications interface (e.g., network interface 116 shown in FIG. 22) may receive the one or more control signals to control the drive system (e.g., drive system 108 shown in FIG. 22) of the mobile robot to move within a portion of the area where no wireless network communication signal is available at operation 46. The one or more control signals may be received via the communications network 130 from server 140 remote platform 160, remote user device 170, and/or remote user device 180 shown in FIG. 23. At operation 48, the processor (e.g., controller 114 shown in FIG. 22) of the mobile robot may autonomously control the drive system of the mobile robot to move the mobile robot to cross the portion of the area with no wireless network communication signal available. At operation 50, when the mobile robot fails to cross the portion of the area the processor autonomously controlling at the processor, the drive system of the mobile robot to move the mobile robot to a previous location with predetermined operational wireless communication signal strength based on the mapping of the wireless network communication signal strength. For example, the mobile robot may fail to cross the portion of the area within a predetermined period of time (e.g., one minute, 5 minutes, ten minutes, or the like). In another example, the mobile robot may fail to cross the portion of the area based on a path being blocked (e.g., by humans, other robots, objects, closed doors, or the like). In yet another example, the mobile robot may fail to cross the portion of the area as the wireless network communication signal may be blocked and/or unavailable.

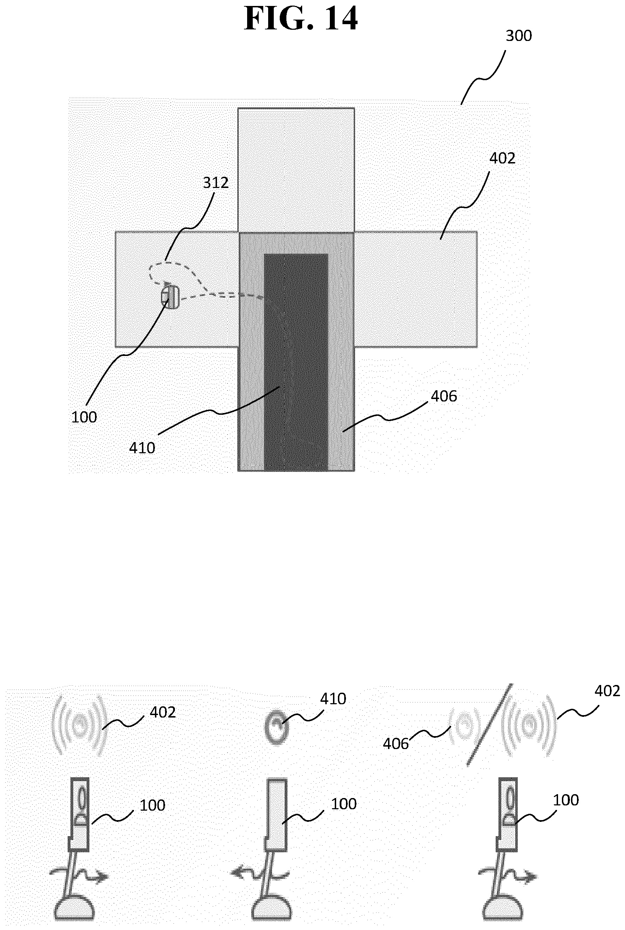

For example, FIG. 14 shows the operations of the mobile robot 100 based on FIG. 4. The mobile robot 100 may travel along path 312 shown in map 300, which includes the wireless network communication signal strength. The mobile robot 100 may receive control signals which may direct the mobile robot along path 312 from a portion of the area having wireless communication signal strength 402 that may be greater than a predetermined amount (i.e., signal strength 402 may indicate a connection with high wireless signal strength) to a portion of the area having a wireless communication signal strength 406 that is less than the predetermined amount (i.e., signal strength 406 may indicate a connection with a reduced wireless signal strength), and to a portion of the area when there is no wireless communications signal available, as indicated by no wireless communications signal 410. The processor may autonomously control the movement of the mobile robot 100 to cross the portion of the area with no wireless communications network signal strength 410. When the mobile robot 100 fails to cross the portion of the area with no communications network signal, the mobile robot may move to a previous location having a wireless communication signal strength 406 that is less than the predetermined amount and/or the portion of the area having wireless communication signal strength 402 that may be greater than a predetermined amount based on the map of the signal strength.

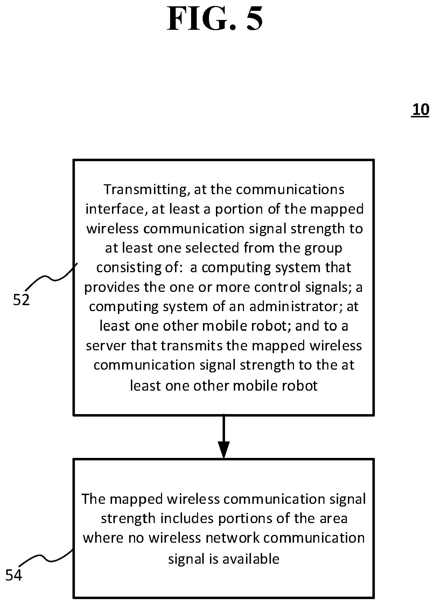

In some implementations, optional operations for method 10 are shown in FIG. 5. At operation 52, the communications interface may transmit at least a portion of the mapped wireless communication signal strength to a computing system that provides the one or more control signals (e.g., server 140, remote platform 160, remote user device 170, and/or remote user device 180 shown in FIG. 23), a computing system of an administrator (e.g., server 140 and/or remote platform 160), at least one other mobile robot (e.g., mobile robot 200, 250), and/or to a server (e.g., server 140) that transmits the mapped wireless communication signal strength to the at least one other mobile robot (mobile robot 200, 250 shown in FIG. 23). In some implementations, as shown in operation 52, the mapped wireless communication signal strength may include portions of the area where no wireless network communication signal is available.

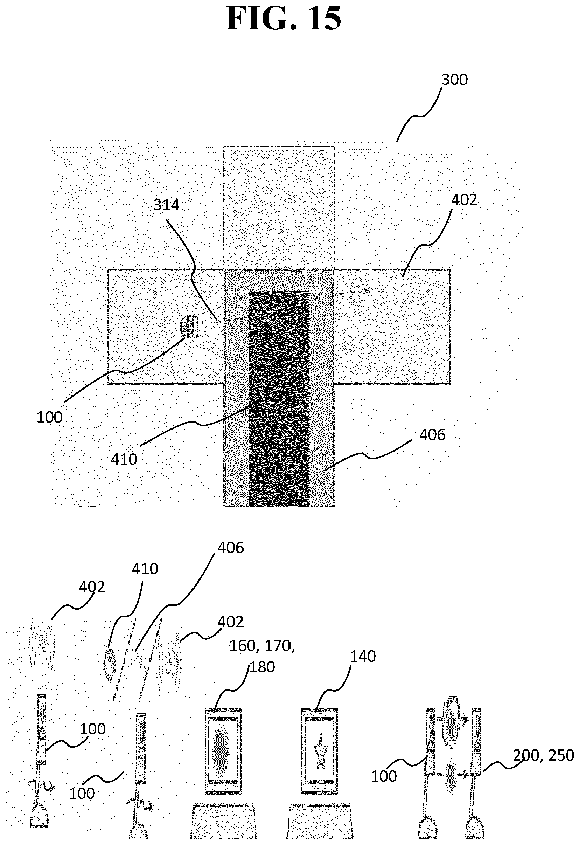

For example, FIG. 15 shows the operations of the mobile robot 100 based on FIG. 5. The mobile robot may receive commands (e.g., from an operator or pilot using server 140, remote platform 160, remote user device 170, and/or remote user device 180 shown in FIG. 23) to move along path 314. The communications interface of the mobile robot 100 may transmit at least a portion of the map of the wireless communication signal strength to a computing system that provides the one or more control signals (e.g., server 140, remote platform 160, remote user device 170, and/or remote user device 180 shown in FIG. 23). That is, the operator and/or pilot of the mobile robot 100 may view the coverage of the wireless communication signal while controlling the movement of the mobile robot 100. In some implementations, the computing system of an administrator (e.g., server 140 and/or remote platform 160) may receive a notification which may allow access to the map of the wireless communication signal strength, and/or identify portions of the area with no wireless communication signal strength. The map of the wireless communication signal strength may be transmitted by the mobile robot 100 to at least one other mobile robot (e.g., mobile robot 200, 250). In some implementations, the mobile robot 100 may transmit the map of the wireless communication signal strength to a server (e.g., server 140 and/or remote platform 160), and the server may transmit the mapped wireless communication signal strength to the at least one other mobile robot.

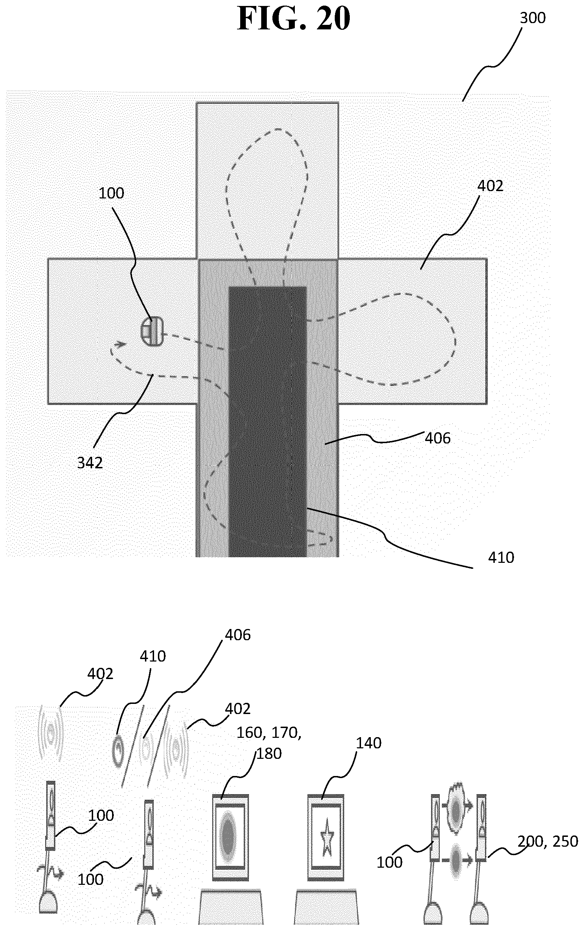

In another example, FIG. 20 shows the operations of the mobile robot 100 based on FIGS. 1 and 5. The mobile robot 100 may move along path 342 and may map the signal strength of the wireless communications signal in at least a portion of the area (e.g., generate map 300). The map 300 may include portions with the wireless communication signal having a predetermined high signal strength 402, portions having a predetermined low signal strength 406, and/or portions with no wireless communications signal 410. The map 300 may be transmitted to a computing system that provides the one or more control signals (e.g., a system of an operator and/or pilot of the mobile robot, which may include server 140, remote platform 160, remote user device 170, and/or remote user device 180 shown in FIG. 23). The mobile robot 100 may transmit a notification to the computing system of an administrator (e.g., server 140 and/or remote platform 160) which may allow access to the map of the wireless communication signal strength, and/or identify portions of the area with no wireless communication signal strength. The map of the wireless communication signal strength may be transmitted by the mobile robot 100 to at least one other mobile robot (e.g., mobile robot 200, 250).

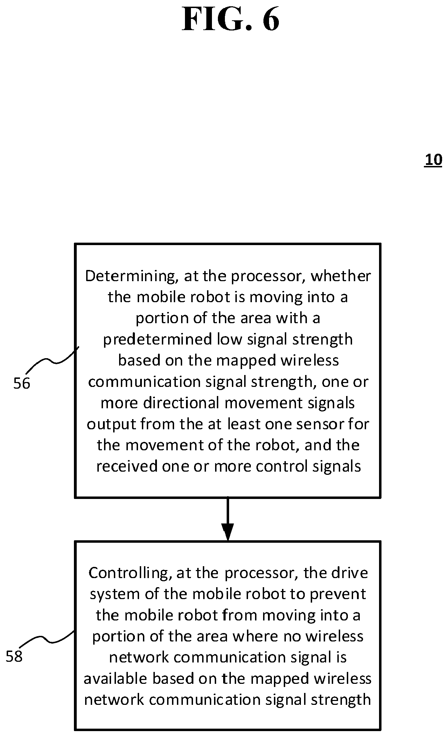

In some implementations, optional operations for method 10 are shown in FIG. 6. At operation 56, the processor (e.g., controller 114 shown in FIG. 22) may determine whether the mobile robot is moving into a portion of the area with a predetermined low signal strength based on the mapped wireless communication signal strength, one or more directional movement signals output from the at least one sensor for the movement of the robot, and the received one or more control signals. At operation 58, the processor may control the drive system of the mobile robot to prevent the mobile robot from moving into a portion of the area where no wireless network communication signal is available based on the mapped wireless network communication signal strength.

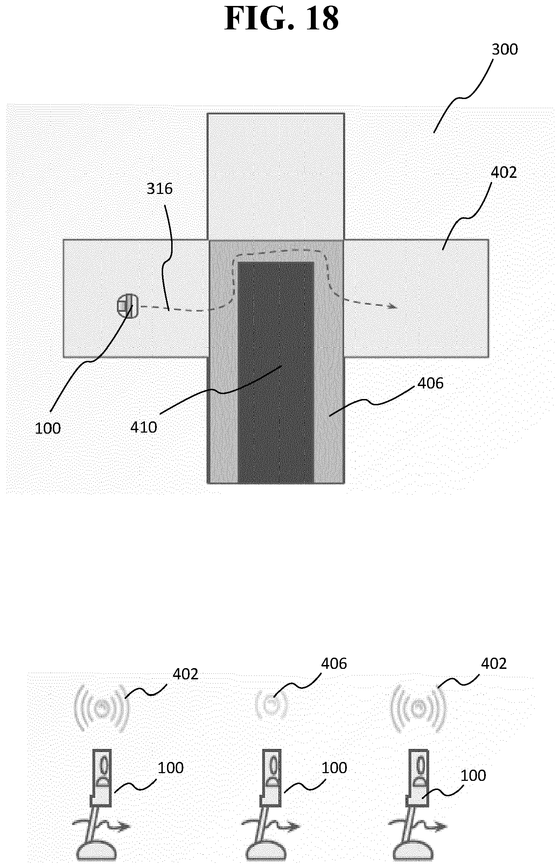

For example, FIG. 18 shows the operations of the mobile robot 100 based on FIG. 6. The mobile robot 100 may receive commands (e.g., from an operator or pilot using server 140, remote platform 160, remote user device 170, and/or remote user device 180 shown in FIG. 23) to move along path 316. The processor of the mobile robot 100 may determine whether the mobile robot is moving into a portion of the area with a predetermined low signal strength (e.g., a wireless communication signal strength 406 that is less than the predetermined amount) based on the mapped wireless communication signal strength, one or more directional movement signals output from the at least one sensor (e.g., sensor 102a, 102b, 102c, 102d shown in FIG. 22) for the movement of the robot, and the received one or more control signals. The processor of the mobile robot 100 may control the drive system of the mobile robot along path 316 to prevent the mobile robot from moving into a portion of the area where no wireless network communication signal is available (e.g., no wireless communications signal strength 410).

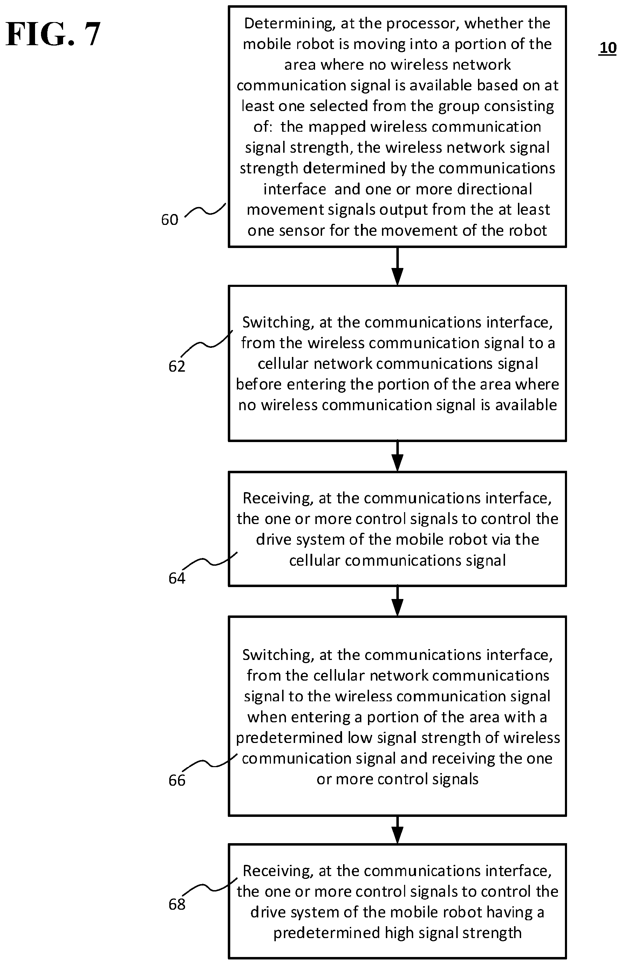

In some implementations, optional operations for method 10 are shown in FIG. 7. At operation 60, the processor (e.g., controller 114 shown in FIG. 22) may determine whether the mobile robot is moving into a portion of the area where no wireless network communication signal is available based on the mapped wireless communication signal strength, the wireless network signal strength determined by the communications interface, and/or one or more directional movement signals output from the at least one sensor (e.g., sensor 102a, 102b, 102c, 102d shown in FIG. 22) for the movement of the mobile robot. At operation 62, the communications interface (e.g., network interface 116 shown in FIG. 22) may switch from the wireless communication signal to a cellular network communications signal before entering the portion of the area where no wireless communication signal is available. At operation 64, the communications interface may receive the one or more control signals to control the drive system of the mobile robot via the cellular communications signal.

At operation 66, the communications interface may switch from the cellular network communications signal to the wireless communication signal when entering a portion of the area with a predetermined low signal strength of wireless communication signal and receiving the one or more control signals. At operation 68, the communications interface may receive the one or more control signals to control the drive system of the mobile robot having a predetermined high signal strength.

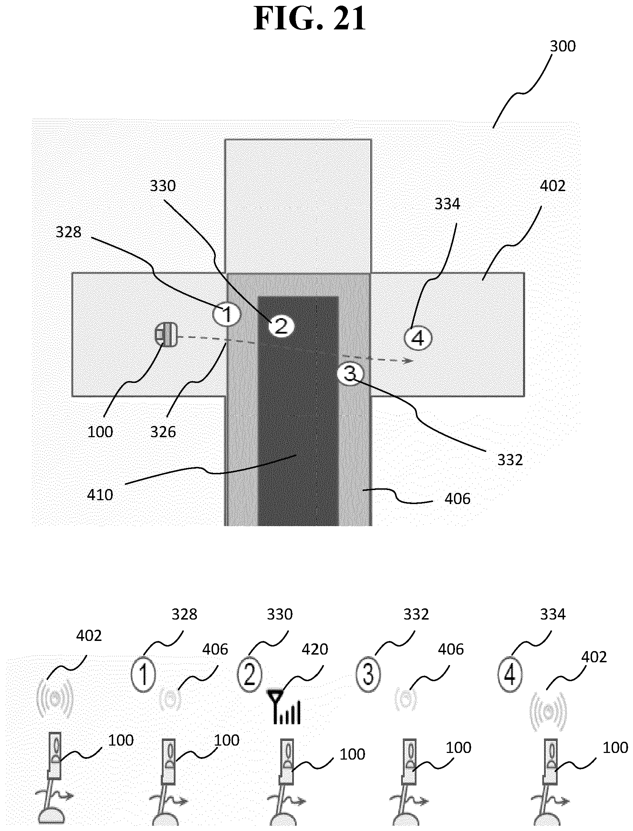

For example, FIG. 21 shows the operations of the mobile robot 100 based on the operations shown in FIG. 7. The processor may determine whether the mobile robot 100 moving along path 326 toward area 326 with a predetermined low signal strength (e.g., a wireless communication signal strength 406 that is less than the predetermined amount). The mobile robot 100 may continue to move along path 326 towards area 330 where no wireless network communication signal 410 is available. Before entering area 330, the mobile robot 100 may switch from the wireless communication signal to a cellular network communications signal 420. The communications interface of the mobile robot may receive the one or more control signals to control the drive system of the mobile robot via the cellular communications signal. The communications interface may switch from the cellular network communications signal 420 to the wireless communication signal when entering area 332 with a predetermined low signal strength of wireless communication signal 406, and may receive the one or more control signals via the wireless communication signal. The mobile robot may continue along path 326 to area 334, where the communications interface of the mobile robot 100 may receive the control signals via a wireless communications signal having a predetermined high signal strength 402.

Implementations FIGS. 8-9 show an example mobile robot 100 according to an implementation of the disclosed subject matter. The mobile robot 100 may have a plurality of sensors. Sensor 102a may be a time-of-flight sensor. Sensor 102b may be an RGB (a Red, Green, Blue image sensor) camera and/or image sensor, and sensor 102c may be an RGB-D (an RGB depth camera). In some implementations, sensor 102b, 102c may be a stereo vision sensor, 3D camera, an image sensor, thermal camera, a structured light camera, or the like. Sensor 102d may be a two-dimensional (2D) Light Detection and Ranging (LiDAR) sensor, a three-dimensional (3D) LiDAR sensor, and/or a radar (radio detection and ranging) sensor, ultrasonic sensor, or the like. The sensors 102a, 102b, and/or 102c may be used to control the movement of the mobile robot, and/or detect surfaces and/or objects that may be mapped by the processor of the mobile robot.

The mobile robot 100 may include at least one microphone 103. In some implementations, the mobile robot 100 may have a plurality of microphones 103 arranged in an array.

The mobile robot 100 may include an light emitting diode (LED), organic light emitting diode (OLED), lamp, and/or any suitable light source that may be controlled by the controller (e.g., controller 114 shown in FIG. 22) to illuminate a portion of the area for navigation of the mobile robot.

The mobile robot 100 may include a motor to drive the drive system 108 to move the mobile robot in an area, such as a room, a building, or the like. The drive system 108 may include wheels, which may be adjustable so that the drive system 108 may control the direction of the mobile robot 100.

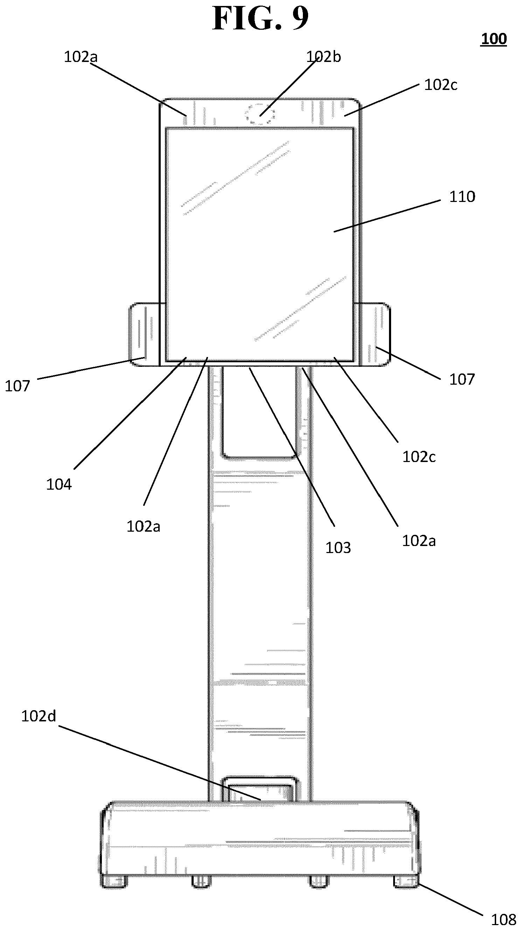

The mobile robot 100 may include one or more speakers 107. In some implementations, such as shown in FIG. 9, speakers 107 may be disposed on first and second sides (e.g., left and right sides) of a display of a user interface 110. The user interface 110 may be an LCD (liquid Crystal Display), an LED display, an OLED display, or the like to display images, such as those received from the server 140, remote platform 160, remote user device 170, and/or remote user device 180. The display of the user interface 110 may be a touch screen.

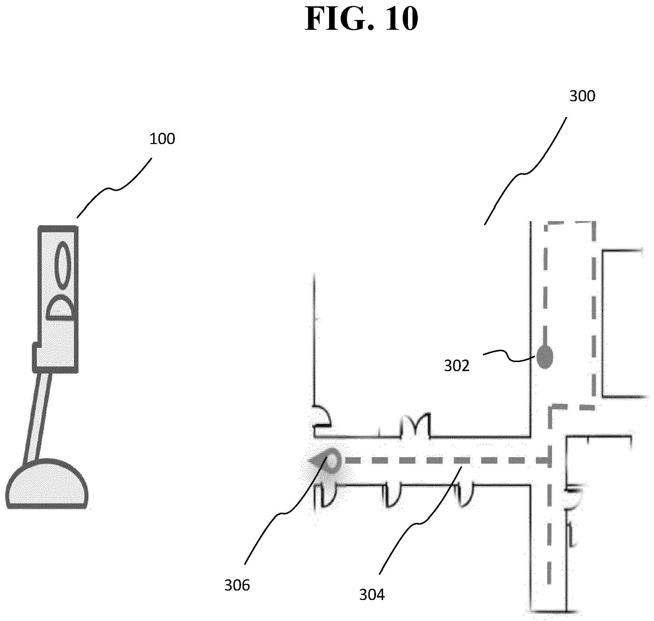

FIG. 10 shows an example of mapping the movement of the mobile robot and the wireless network communication signal strength using the method of FIGS. 1-2C according to an implementation of the disclosed subject matter. As shown in FIG. 10, the mobile robot 100 may generate a map 300 of the area based on the method 10 described above in connection with FIGS. 1-2C. Although a 2D map is shown in FIG. 10, the mobile robot may generate a 3D map of the area.

The map 300 may detail the movement of the mobile robot. For example, point 302 of map 300 may be a starting point of the mobile robot 100, which may move along path 304. Point 306 may show the current position and/or directional orientation of the mobile robot 100. The map 300 may detail objects and/or surfaces in the area that are detected by the one or more sensors of the mobile robot.

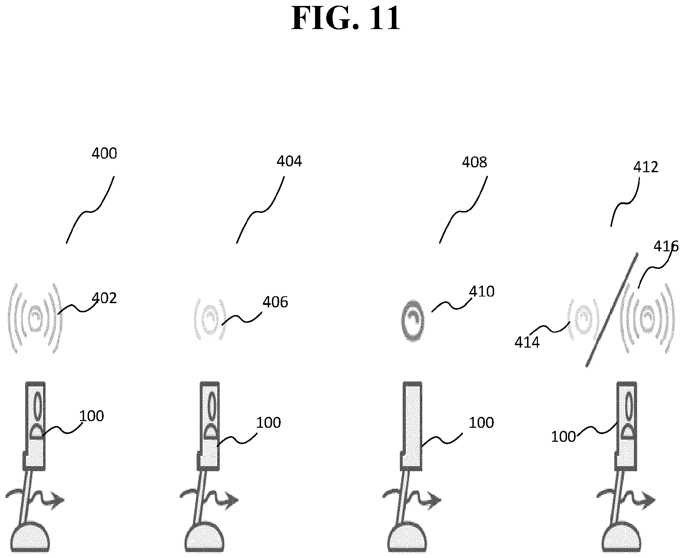

FIG. 11 shows the connectivity of the mobile robot with the communications network as the mobile robot moves in the area based on the method 10 described above in connection with FIGS. 1-2C according to an implementation of the disclosed subject matter. At position 400, the mobile robot 100 may move within the area, where the wireless communication signal strength 402 may be greater than a predetermined amount (i.e., signal strength 402 may indicate a connection with a high wireless signal strength). For example, the mobile robot may receive one or more control signals to control the drive system from an operator, who may provide the control signals from server 140, remote platform 160, remote user device 170, and/or remote user device 180. At position 404, the mobile robot may receive control signals to enter an area having a wireless communication signal strength 406 that is less than the predetermined amount (i.e., signal strength 406 may indicate a connection with a reduced wireless signal strength). Based on a map stored in memory (e.g., map 300 of FIG. 10 stored in memory 118 and/or fixed storage 120 shown in FIG. 22), the processor of the mobile robot may determine that the operator may be directing the mobile robot into a portion of the area with no wireless communication signal. The mobile robot may transmit a notification to the operator (e.g., server 140, remote platform 160, remote user device 170, and/or remote user device 180) while a wireless communications signal is available that the connection may be lost for a determined period of time (e.g., several seconds, a minute, several minutes, or the like).

At position 408, the mobile robot may operate autonomously based on a predetermined path that is stored with a map in memory (e.g., memory 118 and/or fixed storage 120 shown in FIG. 22) when there is no wireless communications signal available, as indicated by no wireless communications signal 410. For example, the processor may retrieve at least a portion of the map from memory, and may control the drive system 108 to move the mobile robot along the path when there is no wireless communication signal available. At position 412, the mobile robot may move to a portion of the area with a reduced signal strength 414 (e.g., similar to signal strength 406 described above) and may arrive at a portion of the area with an increased signal strength 416 (e.g., similar to signal strength 402 described above). The operator may regain control of the mobile robot, and thus the autonomous operating mode may be discontinued.

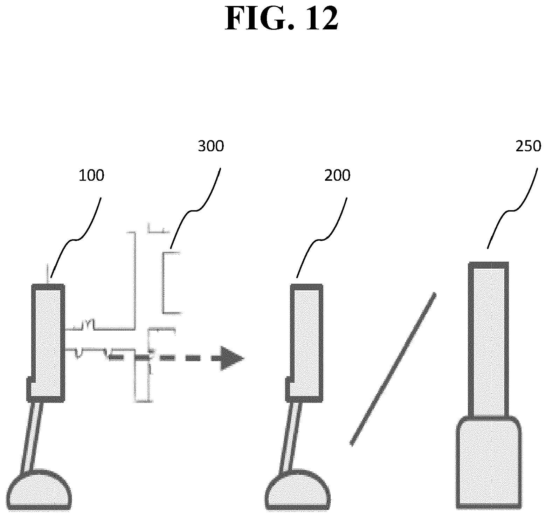

FIG. 12 shows an example sharing operation between mobile robots to share the generated map that includes the wireless network communication signal strength according to an implementation of the disclosed subject matter. As shown in FIG. 12, mobile robot 100 may transmit via a communications link (e.g., network 130 shown in FIG. 23) a copy of the map 300 of the area that includes wireless network communication signal strength at different points on the map to mobile robot 200 and/or mobile robot 250. Mobile robot 200 may be similar to mobile robot 100. Mobile robot 250 may be a different type of mobile robot from mobile robot 100. For example, mobile robot 250 may include an ultraviolet light source that may be used to disinfect the area. By receiving the map, the mobile robot 250 may disinfect the area, and may operate autonomously in portions of the area that do not have connectivity to the communications network.

FIG. 22 shows example components of the mobile robot 100 suitable for providing the implementations of the disclosed subject matter. The mobile robot 100 may include a bus 122 which interconnects major components of the mobile robot100, such as the drive system 108, a network interface 116 operable to communicate with one or more remote devices via a suitable network connection, the controller 114, a memory 118 such as Random Access Memory (RAM), Read Only Memory (ROM), flash RAM, or the like, an input device 113 which may be any device to receive commands from a person, the LED light source 104, sensor 102a, sensor 102b, sensor 102c, sensor 102d, a user interface 110 that may include one or more controllers, a display and associated user input devices such as a touch screen, a fixed storage 120 such as a hard drive, flash storage, and the like, a microphone 103, and a speaker 107 to output an audio notification and/or other information.

The bus 122 allows data communication between the controller 114 and one or more memory components, which may include RAM, ROM, and other memory, as previously noted. Typically, RAM is the main memory into which an operating system and application programs are loaded. A ROM or flash memory component can contain, among other code, the Basic Input-Output system (BIOS) which controls basic hardware operation such as the interaction with peripheral components. Applications resident with the mobile robot 100 are generally stored on and accessed via a computer readable medium (e.g., fixed storage 120), such as a solid-state drive, hard disk drive, an optical drive, solid state drive, or other storage medium.

The network interface 116 may provide a direct connection to a remote server (e.g., server 140, database 150, remote platform 160, and/or remote user device 170 shown in FIG. 23) via a wired or wireless connection (e.g., network 130 shown in FIG. 23). The network interface 116 may provide such connection using any suitable technique and protocol as will be readily understood by one of skill in the art, including digital cellular telephone, WiFi, Bluetooth(R), near-field, and the like. For example, the network interface 116 may allow the mobile robot 100 to communicate with other computers via one or more local, wide-area, or other communication networks, as described in further detail below. The mobile robot may transmit data via the network interface to the remote user device, including data and/or images from the sensors, audio signal generated from sound captured by the microphone, and the like.

Many other devices or components (not shown) may be connected in a similar manner. Conversely, all of the components shown in FIG. 22 need not be present to practice the present disclosure. The components can be interconnected in different ways from that shown. Code to implement the present disclosure can be stored in computer-readable storage media such as one or more of the memory 118, fixed storage 120, or on a remote storage location.

FIG. 23 shows an example network arrangement according to an implementation of the disclosed subject matter. The mobile robot 100 described above, and/or a similar mobile robot 200, may connect to other devices via network 130. The network 130 may be a local network, wide-area network, the Internet, or any other suitable communication network or networks, and may be implemented on any suitable platform including wired and/or wireless networks. The mobile robot 100 and/or mobile robot 200, 250 may communicate with one another, and/or may communicate with one or more remote devices, such as server 140, database 150, remote platform 160, remote user device 170, and/or remote user device 180. The remote user device 170, 180 may be devices used by a user to control the operation of the mobile robot 100, 200. The remote devices may directly access and/or be accessible to the mobile robot 100, 200 or one or more other devices may provide intermediary access, such as where a server 140 provides access to resources stored in a database 150. The mobile robot 100, 200, 250 may access and/or be accessible to remote platform 160 or services provided by remote platform 160 such as cloud computing arrangements and services. The remote platform 160 may include one or more servers 140 and/or databases 150. The remote user device 170, 180 may control the mobile robot 100, 200 and/or receive sensor data, one or more images, audio signals and the like via the network 130. The remote user device 170, 180 may transmit one or more images, video, commands, audio signals, and the like to the mobile robot 100, 200, 250.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as solid state drives, DVDs, CD-ROMs, hard drives, USB (universal serial bus) drives, or any other machine readable storage medium, such that when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing implementations of the disclosed subject matter. When implemented on a general-purpose microprocessor, the computer program code segments configure the microprocessor to create specific logic circuits.

In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may include using hardware that has a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
receiving, at a communications interface, one or more control signals to control a drive system of the mobile robot to move within an area;
detecting, using at least one sensor of the mobile robot, at least one from the group consisting of: a surface within the area, and an object within the area;
mapping, using a processor communicatively coupled to the at least one sensor, the area in two dimensions (2D) or three dimensions (3D) based on the detecting of at least one of the surface and the object as the mobile robot moves within the area based on the one or more received control signals; and
mapping, using the processor and the communications interface, wireless network communication signal strength, including portions of the area where no wireless network communication signal is available, as the mobile robot moves within the area based on the one or more received control signals, wherein the wireless network signal strength is of at least one signal selected from the group consisting of: a Wi-Fi signal, a cellular communications signal, and a radio frequency signal.

2. The method of claim 1, further comprising:
transmitting, at the communications interface, at least a portion of the mapped area and the mapped wireless communication signal strength to at least one other mobile robot.

3. The method of claim 1, further comprising:
determining, at the processor, whether the mobile robot is moving into a portion of the area with a predetermined low signal strength based on the mapped wireless communication signal strength and one or more directional movement signals output from the at least one sensor for the movement of the robot; and
transmitting, at the communication interface, an alert notification that the mobile robot is moving into an area with the predetermined low signal strength.

4. The method of claim 3, further comprising:
determining, at the processor, an amount of time that the mobile robot will operate in the area with the predetermined low signal strength based on the mapped wireless communication signal strength and a movement direction of the mobile robot based on an output of the at least one sensor; and
transmitting, at the communications interface, the determined amount of time with the alert notification.

5. The method of claim 3, further comprising:
autonomously controlling, at the processor, the drive system of the mobile robot to move the mobile robot to a location with a predetermined operational wireless communication signal strength based on the mapping of the wireless network communication signal strength.

6. The method of claim 5, further comprising:
receiving, at the communications interface, the one or more control signals to control a drive system of the mobile robot to move within the area when the mobile robot enters the location having the predetermined wireless operational wireless communication signal strength.

7. The method of claim 1, further comprising:
losing, at the communications interface, the wireless network communication signal when receiving the one or more control signals to control a drive system of the mobile robot to move within the area;
autonomously controlling, at the processor, the drive system of the mobile robot to move the mobile robot to a previous location with a predetermined operational wireless communication signal strength based on the mapping of the wireless network communication signal strength; and
receiving, at the communications interface, the one or more control signals to control the drive system of the mobile robot to move within the area when the mobile robot enters the previous location.

8. The method of claim 7, further comprising:
receiving, at the communications interface, a destination on the map when the mobile robot autonomously controls the drive system to return to the previous location with the predetermined operational wireless communication signal strength; and
autonomously controlling, at the processor, the drive system of the mobile robot to move the mobile robot to the received destination.

9. The method of claim 8, wherein the received destination is located in a portion of the area with no wireless network communication signal.

10. The method of claim 9, further comprising:
receiving, at the communications interface, the one or more control signals to control the drive system of the mobile robot to move within the area when the mobile robot enters a portion of the area having the predetermined operational wireless communication signal strength.

11. The method of claim 1, further comprising:
receiving, at a communications interface, the one or more control signals to control a drive system of the mobile robot to move within a portion of the area where no wireless network communication signal is available; and
autonomously controlling, at the processor, the drive system of the mobile robot to move the mobile robot to cross the portion of the area with no wireless network communication signal is available;
when the mobile robot fails to cross the portion of the area, autonomously controlling at the processor, the drive system of the mobile robot to move the mobile robot to a previous location with predetermined operational wireless communication signal strength based on the mapping of the wireless network communication signal strength.

12. The method of claim 1, further comprising:
transmitting, at the communications interface, at least a portion of the mapped wireless communication signal strength to at least one selected from the group consisting of: a computing system that provides the one or more control signals; a computing system of an administrator; at least one other mobile robot; and to a server that transmits the mapped wireless communication signal strength to the at least one other mobile robot.

13. The method of claim 12, wherein the mapped wireless communication signal strength includes portions of the area where no wireless network communication signal is available.

14. The method of claim 1, further comprising:
determining, at the processor, whether the mobile robot is moving into a portion of the area with a predetermined low signal strength based on the mapped wireless communication signal strength, one or more directional movement signals output from the at least one sensor for the movement of the robot, and the received one or more control signals; and
controlling, at the processor, the drive system of the mobile robot to prevent the mobile robot from moving into a portion of the area where no wireless network communication signal is available based on the mapped wireless network communication signal strength.

15. The method of claim 1, further comprising:
determining, at the processor, whether the mobile robot is moving into a portion of the area where no wireless network communication signal is available based on at least one selected from the group consisting of: the mapped wireless communication signal strength, the wireless network signal strength determined by the communications interface, and one or more directional movement signals output from the at least one sensor for the movement of the robot;
switching, at the communications interface, from the wireless communication signal to a cellular network communications signal before entering the portion of the area where no wireless communication signal is available;
receiving, at the communications interface, the one or more control signals to control the drive system of the mobile robot via the cellular communications signal;
switching, at the communications interface, from the cellular network communications signal to the wireless communication signal when entering a portion of the area with a predetermined low signal strength of wireless communication signal and receiving the one or more control signals; and
receiving, at the communications interface, the one or more control signals to control the drive system of the mobile robot having a predetermined high signal strength.
